(19) Europäisches Patentamt
European Patent Office
Office européen des brevets

(11) EP 2 573 934 B1

(12) EUROPEAN PATENT SPECIFICATION

(45) Date of publication and mention
of the grant of the patent:
**30.10.2019 Bulletin 2019/44**

(51) Int Cl.:
*H02P 21/00* (2016.01)      *H02P 1/50* (2006.01)
*H02P 6/18* (2016.01)       *H02P 27/04* (2016.01)
*H02P 27/06* (2006.01)      *H02P 21/34* (2016.01)
*H02P 27/08* (2006.01)      *H02P 21/24* (2016.01)
*H02P 6/12* (2006.01)

(21) Application number: **11783271.7**

(22) Date of filing: **17.05.2011**

(86) International application number:
**PCT/JP2011/002738**

(87) International publication number:
**WO 2011/145334 (24.11.2011 Gazette 2011/47)**

(54) **CONTROL DEVICE WITHOUT A ROTATION SENSOR**

STEUERVORRICHTUNG OHNE ROTATIONSSENSOR

DISPOSITIF DE COMMANDE SANS CAPTEUR DE ROTATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2010 JP 2010116601**

(43) Date of publication of application:
**27.03.2013 Bulletin 2013/13**

(73) Proprietor: **Kabushiki Kaisha Toshiba, Inc.
Tokyo 105-8001 (JP)**

(72) Inventors:
• **TANIGUCHI, Shun**
  **Tokyo 105-8001 (JP)**
• **YASUI, Kazuya**
  **Tokyo 105-8001 (JP)**
• **YUUKI, Kazuaki**
  **Tokyo 105-8001 (JP)**
• **NAKAZAWA, Yosuke**
  **Tokyo 105-8001 (JP)**

(74) Representative: **AWA Sweden AB
P.O. Box 11394
404 28 Göteborg (SE)**

(56) References cited:
**JP-A- 2004 180 368      JP-A- 2004 328 920
JP-A- 2005 065 410      JP-A- 2008 199 864
JP-A- 2009 201 284      US-A1- 2010 109 583**

• **PARASILITI F ET AL: "Sensorless speed control
of a PM synchronous motor by sliding mode
observer", INDUSTRIAL ELECTRONICS, 1997.
ISIE '97., PROCEEDINGS OF THE IEEE INTER
NATIONAL SYMPOSIUM ON GUIMARAES,
PORTUGAL 7-11 JULY 1997, NEW YORK, NY,
USA,IEEE, US, 7 July 1997 (1997-07-07), pages
1106-1111, XP010264987, DOI:
10.1109/ISIE.1997.648894 ISBN:
978-0-7803-3936-1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**[Technical field]**

An embodiment of the present invention relates to a rotation sensor-less control device for a synchronous motor.

**[Technical background]**

In regard to rotation sensor-less control devices for synchronous motors, many methods have been proposed to restarting the control device in a free-running condition. In a free-running condition, a notch instruction from the driver's cab is set to neutral (0), and coasting operation is performed with gate commands for all switching element of an inverter, that drives a motor, being OFFs. When the vehicle speed is in the high-speed region, methods using induced voltage have been proposed, specifically, a method using zero current control and a method using short-circuit current, for example. Or, when the vehicle speed is in the low-speed region, a method has been proposed utilizing inductance. Furthermore, the method has been proposed in which a suitable technique is selected, in accordance with the angular velocity of the motor, from these two. By such methods, starting from a free-running condition can be achieved.

**[Prior art references]**

[Patent reference 1] Laid-open Japanese Patent Application No. 2008-01 690
[Patent reference 2] Japanese Patent No. 3636340
[Patent reference 3] Laid-open Japanese Patent Application No. H 7-177788
[Patent reference 4] Japanese Patent No. 3486326

JP2009201284 discloses a variable speed driver of a PM motor capable of performing pickup activation from a high-speed idling state by adding a few functions to the existing variable speed driver without superposing a high-frequency current or without flowing a pulse-like short circuit current. Upon picking up a motor when the motor in an idle state is started by being connected to the variable speed driver, current demands id*, iq* of current control parts 1A, 1B in JP2009201284 are made zero, respectively, and in gain switching circuits, a gain in a current control system is made larger than that for control at normal time.

[Outline of the invention]

**[Problem that the invention is intended to solve]**

Restarting from the free-running condition can be achieved using the techniques described above, but, in all cases, restarting cannot be achieved over entire speed regions with a single technique. Thus there are problems such as that, in order to attempt restarting by more than one technique, in the worst case, the time required for restart becomes very long, or the restart sequence for employing several techniques becomes complicated. (By "the time required for restart" is meant the time from issuance of a torque (current) instruction until torque is generated in the motor with the real angle and measured angle of the motor rotor being equal). In particular, the time required for restart has considerable influence on the response from issuance of the torque instruction, so, usually, rise of the current instruction is effected in a manner matching the worst case: thus shortening the time in the worst case is associated with improved responsiveness.

Also, in the case of a system in which a load contactor is provided between the inverter and the synchronous motor, free-running is possible even in the region (hereinafter, this region will be termed the "high-voltage region") where the no-load induced voltage exceeds the voltage on the DC side of the inverter, by opening the load contactor. However, when restart is effected from this condition, there is a possibility that the voltage on the DC side of the inverter may become an over-voltage, due to the no-load induced voltage. It is therefore necessary to make it possible to achieve stable startup in the high-voltage region.

Consequently, an object of the present invention is to provide rotation sensor-less control of a synchronous motor whereby restarting from free-running can be achieved in all regions, including the region where the no-load induced voltage is larger than the voltage on the DC side of the inverter.

**[Means for solving the problem]**

The present invention is defined in the independent claims.

In order to solve the above abroblem, a rotation sensor-less control device according to the present embodiment is constructed as follows. Specifically, a rotation sensor-less control device that controls an inverter that drives a synchronous machine, comprises: a phase angle/angular velocity inference section that infers the phase angle and angular velocity of a rotor, using both the inductance and induced voltage of said synchronous machine; and a control section that generates a voltage instruction value and controls the output current of aforementioned inverter using PWM in which only a non-zero voltage vector is selected, on startup from free running of the aforementioned inverter and motor; wherein aforementioned phase angle/angular velocity inference section infers aforementioned rotational phase angle/angular velocity, using aforementioned voltage instruction value and inverter output current.

**[Brief description of the drawings]**

Fig. 1 is a block diagram showing the system layout of a first embodiment of the present invention;
Fig. 2 is a vector diagram showing a method of voltage vector selection according to the embodiment;
Fig. 3 is a block diagram showing a method of voltage vector selection according to the embodiment;
Fig. 4 is a block diagram showing the system layout of a second embodiment of the present invention;
Fig. 5 is a block diagram showing the layout of a startup time control section 21;
Fig. 6 is a block diagram showing the layout of an ordinary time control section 23;
Fig. 7 is a flow chart showing the operation of the second embodiment;
Fig. 8 is a flow chart showing the operation of a third embodiment;
Fig. 9 is a block diagram of a system in which a second NS identification method is adopted;
Fig. 10 is a block diagram showing the layout of a PLL 9;
Fig. 11 is a vector diagram showing the no-load induced voltage;
Fig. 12 is a vector diagram given in explanation of another NS identification method;
Fig. 13 is a block diagram showing a construction for identifying the need for NS identification;
Fig. 14 is a flow chart showing the action of NS identification;
Fig. 15 Block diagram showing the layout of a fourth embodiment.

**[Modes for putting the invention into practice]**

Embodiments of the present invention relates to technologies on how to restart from free-running for rotation sensor-less control.

An embodiment of a rotation sensor-less control device and a method of restart from free-running according to the present invention are described below with reference to the drawings.

[Embodiment 1]

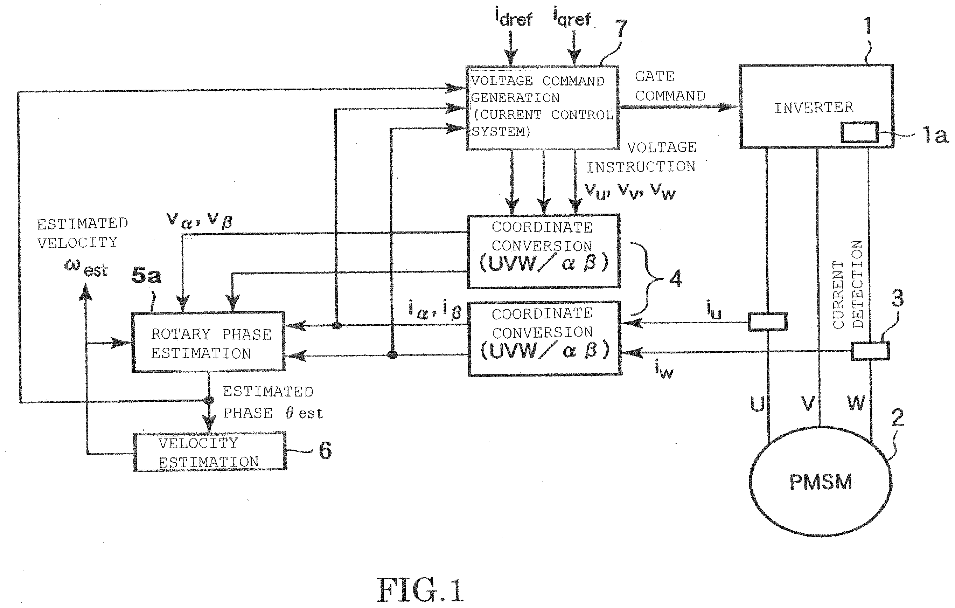

Fig. 1 is a block diagram showing the layout of a first embodiment of a rotation sensor-less control device according to the present invention.

An inverter 1 transforms DC current into AC current, and vice versa, by switching switching-elements of a main circuit of the inverter 1 in response to a gate command inputted. The motor 2 is a PMSM (permanent magnet synchronous motor), that generates a magnetic field by means of a three-phase AC current flowing in each excitation phase, and generates torque by magnetic interaction with a rotor. A current detection section 3 detects the current response values of two phases or three phases of the three-phase AC current flowing to the PMSM. Fig. 1 shows a layout in which two-phase current is detected.

A coordinate conversion means 4 performs coordinate conversion of the u, v and w three-phase fixed coordinate system regarding the motor 3 and an $\alpha\beta$ axes fixed coordinate system. The $\alpha$ axis indicates the u phase winding axis of the motor 3, and the $\beta$ axis is an axis orthogonal to the $\alpha$ axis. A rotary phase estimating section 5a estimates the rotary phase angle of the motor 3 from the current response values $i_\alpha$, $i_\beta$ detected by this current detection section (the details will be described later).

An angular velocity estimating section 6 estimates the angular velocity $\omega_{est}$ from the phase $\theta_{est}$ estimated by the rotary phase estimating section 5. For example, this may be means for performing a calculation based on the time differential (temporal differentiation) of the estimated phase $\theta_{est}$, or means for estimating the angular velocity $\omega_{est}$ by a PLL (phase locked loop), using as input the difference between the estimated phase $\theta_{est}$ and the calculated phase.

The voltage command generating section 7 determines and outputs the gate signal using the current response values $i_\alpha$, $i_\beta$ and current instruction values $i_{dref}$, $i_{qref}$ obtained through the coordinate transformation means 4 from the current detection section 3 (the details will be described later). In this case, the phase/angular velocity is estimated using a fixed coordinate system, but this could be estimated using a rotating coordinate system.

Next, the method of phase estimation by the rotary phase estimating section 5a will be described in detail.

The general voltage equation on the d-q axes of a salient-pole PMSM, such as the motor 2, is shown as equation (1). The magnetic flux direction of the rotor is designated as the d axis and the direction advanced from the d axis by 90° is designated as the q axis.

[Math 1]

$$\begin{bmatrix} v_d \\ v_q \end{bmatrix} = \begin{bmatrix} R_m + pL_d & -\omega L_q \\ \omega L_d & R_m + pL_q \end{bmatrix} \begin{bmatrix} i_d \\ i_q \end{bmatrix} + \Phi_f \omega \begin{bmatrix} 0 \\ 1 \end{bmatrix} \qquad \cdots \ (1)$$

where $v_d$ and $v_q$ are the d-q axes voltages of the armature, $i_d$ and $i_q$ are the d-q axes currents of the armature, $R_m$ is the winding resistance, $L_d$ and $L_q$ are the d-q axis inductances, $\omega$ is the d-q axis rotor angular velocity, $\Phi_f$ is the magnetic flux coefficient of the magnet, and p (= d/dt) is the differential operator. These inductances $L_d$, $L_q$ are characteristic values of the motor.

By expanding the induced voltage so that the inductances of the diagonal component and inverse diagonal component of the matrix of the first term on the left-hand side of equation (1) are the same, the positional information is concentrated in the induced voltage component, making it possible to calculate the phase $\theta$. When the induced voltage is expanded, the voltage equation of equation (1) may be expressed by equation (2)

[Math 2]

$$\begin{bmatrix} v_d \\ v_q \end{bmatrix} = \begin{bmatrix} R_m + pL_d & -\omega L_q \\ \omega L_q & R_m + pL_d \end{bmatrix} \begin{bmatrix} i_d \\ i_q \end{bmatrix} + \begin{bmatrix} 0 \\ (L_d - L_q)(\omega i_d - p i_q) + \omega \Phi_f \end{bmatrix} \qquad \cdots \ (2)$$

When the coordinates of equation (2) are transformed to $\alpha$-$\beta$ coordinates, equation (3) is obtained.

[Math 3]

$$\begin{bmatrix} v_\alpha \\ v_\beta \end{bmatrix} = \begin{bmatrix} R_m + pL_d & -\omega(L_q - L_d) \\ \omega(L_q - L_d) & R_m + pL_d \end{bmatrix} \begin{bmatrix} i_\alpha \\ i_\beta \end{bmatrix} + E_{0x} \begin{bmatrix} -\sin\theta \\ \cos\theta \end{bmatrix} \qquad \cdots \ (3)$$

where $v_\alpha$ and $v_\beta$ are the $\alpha$-$\beta$ axis armature voltages and $i_\alpha$, $i_\beta$ are the $\alpha$-$\beta$ axis armature currents. Also, the expanded induced voltage (expanded induced voltage $E_{0x}$) is expressed by equation (4).

[Math 4]

$$\begin{aligned} E_{0x} &= (L_d - L_q)(\omega i_d - p i_q) + \omega \Phi_f \\ &= (L_d - L_q)(\omega(i_\alpha \cos\theta + i_\beta \sin\theta) - p(-i_\alpha \sin\theta + i_\beta \cos\theta)) + \omega \Phi_f \end{aligned} \qquad \cdots \ (4)$$

From equation (3), the phase $\theta$ can be calculated by equation (5).

[Math 5]

$$\begin{cases} e_\alpha = -E_{0x} \sin\theta = v_\alpha - (R_m + pL_d) i_\alpha - \omega(L_d - L_q) i_\beta \\ e_\beta = E_{0x} \cos\theta = v_\beta + \omega(L_d - L_q) i_\alpha - (R_m + pL_d) i_\beta \\ \theta = -\tan^{-1}(e_\alpha / e_\beta) \end{cases} \qquad \cdots \ (5)$$

Also, this phase estimation could be performed by other estimation methods, so long as these are capable of being used for both the induced voltage and inductance.

As expressed by equation (4), when the angular velocity $\omega$ is small, $E_{0x}$ is merely the differential term of the qaxis current. When $E_{0x}$ becomes small, when the phase $\theta$ is calculated in equation (5), the error becomes large, so accurate estimation cannot be achieved; however, if the current differential term becomes larger, accurate phase estimation can be achieved from low speed region to high speed region. As shown by for example the first term of equation (4), when the current differential term $pi_q$ is large, $E_{0x}$ becomes large, and the accuracy of estimation of the phase $\theta$ expressed by equation (5) rises, and so the phase can be accurately estimated from low speed to high speed.

Next, a voltage command generating section 7 according to an embodiment of the present invention will be described.

As the voltage command generating section 7, for example a current tracking PWM (sometimes also called a current tracking type PWM) that directly generates a PWM signal such that the instantaneous value of the inverter output current tracks the reference value may be employed. An example of a current tracking PWM control operation is described in Japanese Patent No. 3267528. In the current tracking PWM, only a non-zero voltage vector is selected as the voltage vector in this embodiment, in order to ensure that the current differential term is large, as explained above, so that the phase can be accurately estimated.

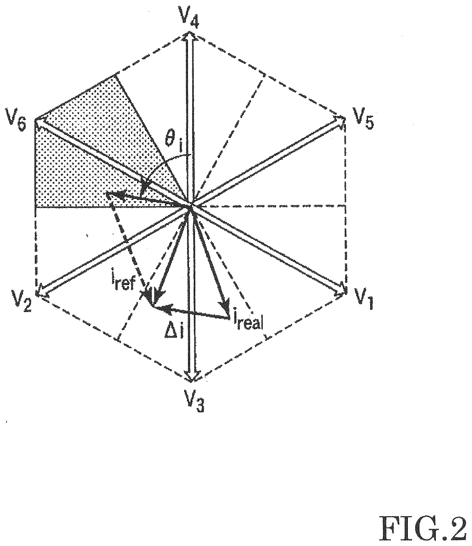

Fig. 2 shows a specific method of selection. Fig. 2 shows the output voltage vectors $V_1$ to $V_6$ (voltage vector command) of the inverter 1. Apart from these, the inverter 1 can generate $V_0$ and $V_7$ as the output voltage vectors. If the voltage vector $V_1$ is expressed by the uvw gate signal, this corresponds to (001). Likewise, $V_2$ to $V_7$ and $V_0$ are respectively (010), (011), (100), (101), (110), (111) and (000). Of these, $V_0$ and $V_7$ are zero voltage vectors, since the inter-phase voltage of uvw is 0V. In contrast, the voltage vectors $V_1$ to $V_6$ are non-zero voltage vectors. When the inverter 1 outputs the zero voltage vector $V_0$ or $V_7$, the current changes only in dependence on the induced voltage of the rotor, so the amount of change is small. Consequently, in this embodiment, only non-zero voltage vectors are selected as voltage vectors, in order to ensure that the current differential term on restart from free-running is large.

In Fig. 2, first of all, the difference $\Delta i$ of the current instruction vector $i_{ref}$ and the detected current vector $i_{real}$ is calculated. The current instruction vector $i_{ref}$ is the current vector of the $\alpha\beta$ axes current instruction values $i_{\alpha ref}$, $i_{\beta ref}$ obtained by coordinate conversion of the dq axes current instruction values $i_{dref}$, $i_{qref}$, based on the estimated phase $\theta_{est}$. Also, the detection current vector $i_{real}$ is the current vector of the $\alpha\beta$ axes detected currents $i_\alpha$, $i_\beta$.

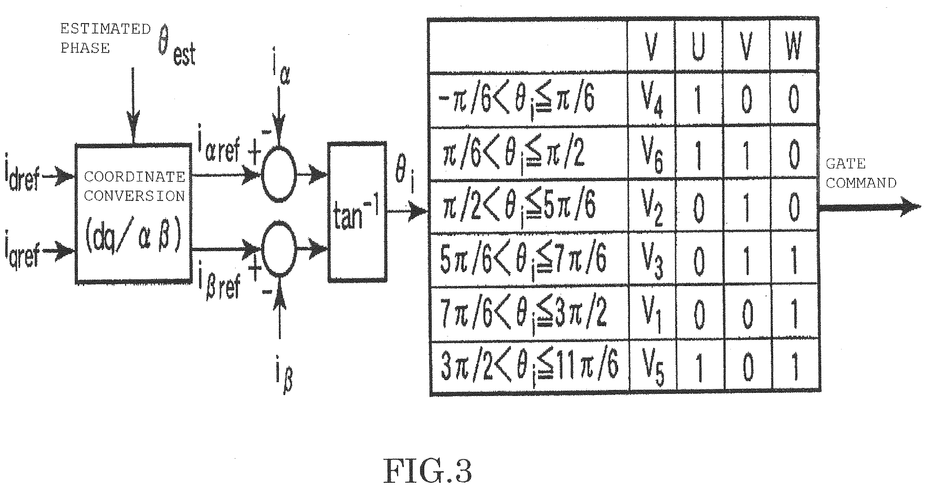

Next, by finding the angle $\theta i$ of $\Delta i$, as shown on the left-hand side in Fig. 3, the voltage vector that is closest in that direction is selected ($V_6$ in Fig. 2).The reason for this is that, if the voltage vector ($V_6$ in the Figure) is selected so that the difference current $\Delta i$ flows, the detected current vector $i_{real}$ approaches the current instruction vector $i_{ref}$. The sequence is shown on the right-hand side in Fig. 3.

Thus, in this embodiment, on restart from free-running, the zero-voltage vectors $V_0$ and $V_7$ are not selected, but one of the non-zero voltage vectors $V_1$ to $V_7$ is selected in each control cycle. The final gate command is calculated using the table shown in Fig. 3. In this case, as the non-zero voltage vector, the voltage vector that is closest in the direction of $\Delta i$ was selected, but, so long as the selection is confined to non-zero voltage vectors, another method of selection could be employed. Also, even without always selecting only non-zero voltage vectors, similar benefits could be obtained by increasing the ratio of selection of non-zero voltage vectors.

As described above, with this embodiment, since a zero voltage vector is not selected, the current differential term can be made large, so the expansion induced voltage $E_{0x}$ can be calculated using equation (4) and the phase $\theta$ can be found using equation (5): thus phase/angular velocity estimation can be achieved by a single method in the entire speed range from stationary to high speed. As can be seen from equation (4) and equation (5), in this embodiment, the rotary phase estimating section 5a can estimate the phase angle of the rotor using both the armature inductances $L_d$, $L_q$ and the induced voltage $\omega\Phi_f$ of the synchronous motor.

Next, the current instruction values according to an embodiment of the present invention will be described.

In equation (4) $L_d$ - $L_q$ are negative values. Consequently, if the current differential term is neglected, when negative current flows in the d axis (direction of the magnetic flux of the rotor), the expansion induced voltage $E_{0x}$ becomes large. Consequently, the accuracy of estimation of the phase $\theta$ from equation (5) is increased. In addition, since, with the current differential term, positive and negative values can be obtained centered on zero, when negative current flows in the d axis direction, the average value of the expansion induced voltage $E_{0x}$ becomes large, increasing the overall accuracy of estimation of the phase $\theta$. Also, if, on restart from free-running, a negative current does not flow in the d axis direction in the high-voltage region, a regenerated current flows due to the no-load induced voltage produced by the permanent magnet rotor, so there is the possibility of the voltage on the DC side of the inverter becoming an over-voltage. Consequently, it is preferable that a negative current should flow in the d axis from restart. For similar reasons, it is preferable that a negative current should flow in the d axis in the region close to the high-voltage region, so that no regenerated current should flow, even in the event of rapid change in the voltage on the DC side of the inverter 1. Thus, as described above, in this embodiment, a negative current instruction on the d axis is supplied from restart, in order to improve the accuracy of estimation and to prevent over-voltage.

Also, although it is preferable that, in the phase estimating section 5, a negative current should flow in the d axis in the entire region, by having a positive current flow in the d axis in the low speed region, the amplitude becomes large without changing the phase of the voltage instruction factor, because of the d axis-direction inductance of the rotor. Consequently, in for example a technique in which the phase is estimated from the phase of the current instruction vector, improved accuracy of phase estimation can be expected. In such cases, it is advantageous to select positive/negative by identifying the speed region based on for example the angular velocity or no-load induced voltage, and to improve the accuracy of estimation by having a positive current flow in the d axis in the low-speed region but preventing over-voltage by having a negative current flow in the d axis in the high-speed region. Alternatively, it is possible to make this selection by reference to voltage rather than to angular velocity as described above. For example, as in the fourth embodiment, to be described later, the speed can be roughly estimated by whether or not current flows on closure of the load contactor.

Alternatively, if the object is solely to prevent over-voltage, the speed region can be identified based on for example the angular velocity or no-load induced voltage, and over-voltage can be prevented by having a negative current flow in the d axis if the speed region is the high-speed region.

In the above, the d axis direction is in fact not well-defined, so, unless the method is employed together with a method of estimation in a short time, there is a risk that torque may be generated by current flowing in the q axis direction. For this reason, the most beneficial effect can be achieved by combination of a method whereby estimation can be achieved in a short time over the entire speed range with a method in which, as described above, a zero voltage vector is not selected. However, the beneficial effect of the present example can be obtained even without combining it with the method as described above whereby a zero voltage vector is not selected.

Although, in the present embodiment, the PMSM (permanent magnet synchronous motor) is described, the same benefits could be obtained even with a synchronous machine using an electromagnet as the rotor. However, when a permanent magnet synchronous motor is employed, as in the present embodiment, the magnetic flux cannot be adjusted, so in particular the problem of the magnetic flux generated on restarting from free-running is severe, so the beneficial effect of application of the present invention is considerable.

[Embodiment 2]

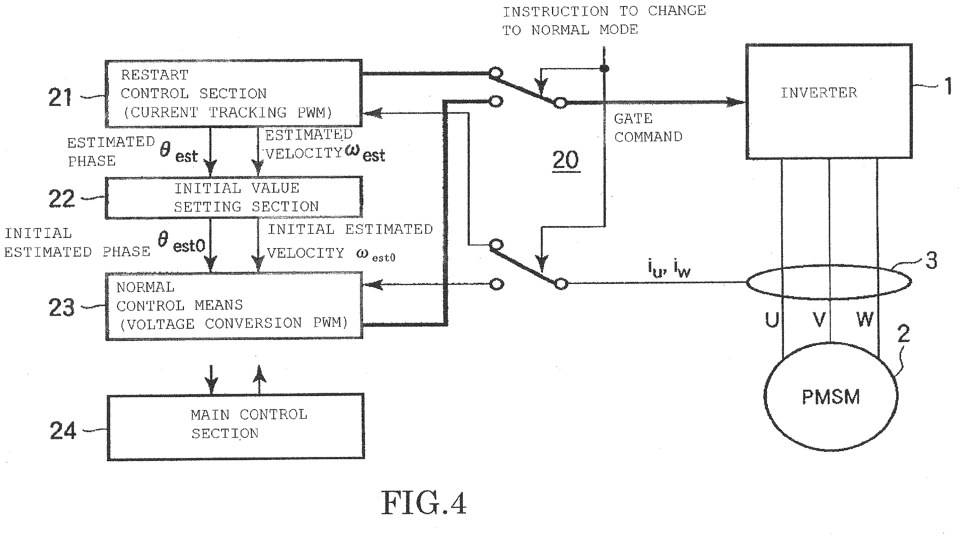

Next, a second embodiment of a motor control device according to the present invention will be described. Fig. 4 is a block diagram showing the layout of the second embodiment.

The inverter 1, the motor 2 and the current detection means 3 are constituted by the same structural elements as in the case of the first embodiment, so detailed description thereof is dispensed with. A mode switch 20 constitutes changeover means that is set to the side of the restart control section 21, in the case of restart from a free-running, but is changed over to the side of an normal control section (a normal control means) 23 after restart has been completed or after a prescribed time. A restart control section 21 is a current tracking PWM-based control circuit that controls the inverter while restarting from the free-running. The normal control section 23 is a voltage-modulation PWM-based control circuit (or voltage-modulation type PWM-based control circuit) that controls the inverter 1 during the normal operation (or the normal control period), after completion of restart or after a prescribed time. An initial-value setting section 22 is a storage section for setting the estimated phase $\theta_{est}$ and estimated speed $\omega_{est}$, determined by the restart control section 21. A main control section 24 is connected with example the restart control section 21, normal control section 23 and mode switch 20, and exercises overall control of this motor control device.

Only on restart from the free-running, the inverter 1 is controlled by the restart control section 21 and the estimated phase $\theta_{est}$ and estimated speed $\omega_{est}$ of the motor 2 are determined: normal operation is then performed by controlling the inverter 1 by the normal control section 23, using these values as the initial values.

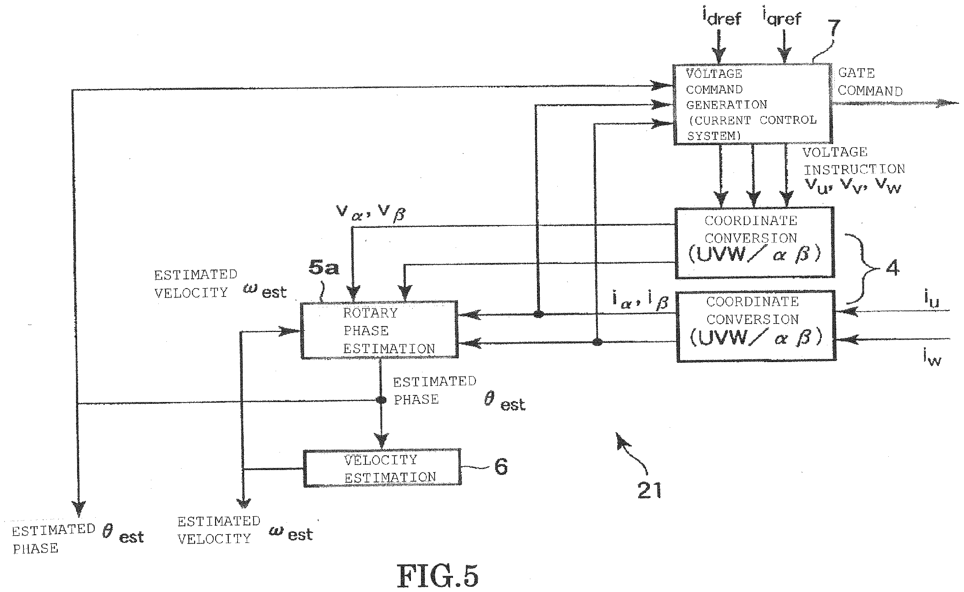

Fig. 5 is a block diagram showing the layout of the restart control section 21. The restart control section 21 has the same construction as the inverter control section of Fig. 1, so a detailed description thereof is dispensed with.

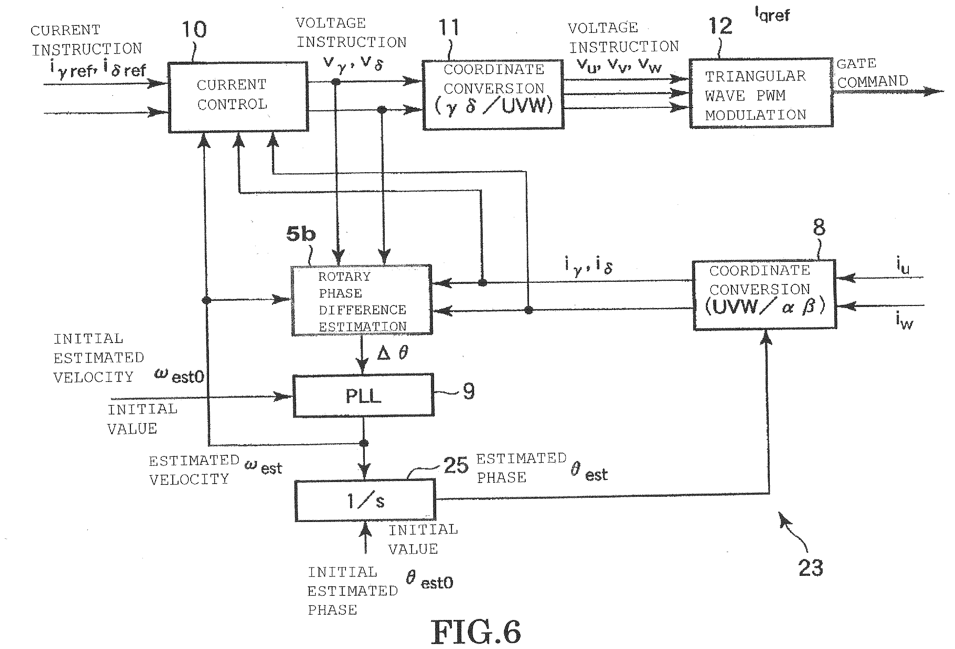

Fig. 6 is a block diagram showing the layout of the normal control section 23.

The rotary phase difference estimating section 5b estimates the rotary phase angle of the synchronous machine and the phase difference $\Delta\theta$ of the $\gamma\delta$ axes rotation coordinate system from the current response values that are detected by the current detection section 3 described above and that are input through the coordinate conversion section 8. The $\gamma$ axis is the estimated axis of the d axis; the $\delta$ axis is the estimated axis orthogonal to the $\gamma$ axis. The PLL (Phase Locked Loop) performs for example PI control using the phase difference $\Delta\theta$ estimated by the rotary phase difference estimating section 5b described above, and calculates the angular velocity $\omega_{est}$ of the rotor. An integration section 25 integrates this angular velocity $\omega_{est}$, using the initial estimated phase $\theta_{est0}$ as the initial value, and outputs the estimated phase $\theta_{est}$.

The coordinate conversion section 8 performs coordinate conversion of the three-phase fixed coordinate system and the $\gamma\delta$ axes rotating coordinate system, using the estimated phase $\theta_{est}$. A current control section 10 determines the voltage instruction values $v_\gamma$, $v_\delta$ by comparing the current instruction values $i_{\gamma ref}$ and $i_{\delta ref}$ with the current response values $i_\gamma$ and $i_\delta$ that were detected by the current detection section described above.

The coordinate conversion section 11 performs coordinate conversion of the $\gamma\delta$ axes rotating coordinate system and three-phase fixed coordinate system. The triangular wave PWM modulation section 12 performs triangular wave PWM modulation of the voltage instruction values (modulation factor instruction values) for driving the synchronous machine 2, and outputs gate signals constituting ON/OFF instructions to the respective phase switching elements of the inverter 1.

In this case, the phase angle is estimated using a rotating coordinate system, but the system for estimating phase angle in the fixed coordinate system shown in Embodiment 1 could also be employed.

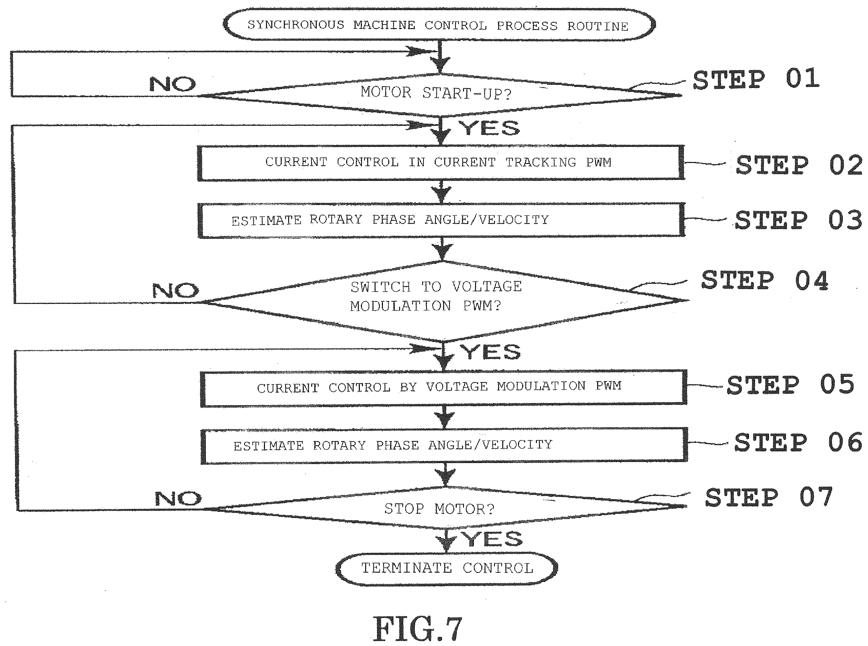

Fig. 7 is a flow chart showing the operation of this embodiment. This operation is performed under the control of the control section 24.

In step 01, the main control section 24 determines whether or not a motor driving instruction is input from for example the driver's cab (not shown) and, in the case of driving the motor, proceeds to step 02. In step 02, the motor 2 is driven by performing current control by the restart control section (current tracking PWM) 21. "Current tracking PWM" is a technique for directly generating a PWM signal such that the instantaneous value of the inverter output current tracks the reference value. This current tracking PWM has the characteristic feature that current response is extremely rapid, so it is suited for injecting current on startup and appearance of over-voltage on the DC side of the inverter 1 as described above can be prevented.

In step 03, the rotary phase angle/angular velocity is estimated using the current or voltage instructions generated in step 02. The method used for this estimation is the expansion induced voltage method, described in the first embodiment.

In step 04, a decision is made whether or not to change over to the normal control section (voltage modulation PWM) 23. This changeover may be determined by reference to the time, or may be determined as when the phase estimation process has settled down, may be determined as when the torque has risen, or may be determined as when the torque has risen and settled down.

In step 05, the estimated phase $\theta_{est}$ and the estimated speed $\omega_{est}$ determined by the restart control section 21 are set in the initial setting section 22 and the mode switch 20 is changed over to the normal control section 23. The normal control section 23 performs current control by voltage modulation type PWM using these set values. "Voltage modulation PWM" means a system in which PWM is performed based on the result of calculating the voltage instructions (modulation factor instructions) by current control, as for example a combination of dq axes current control and triangular wave comparison PWM.

In step 06, the rotary phase angle/angular velocity is estimated using the current or voltage instructions generated in step 05. The method used for estimation may be the same method as in step 03 or may be any other method. As another method, the method may be employed of using the induced voltage or the method of using the inductance. In step 07, a determination is made as to whether or not a motor stop instruction has been input and if such a motor stop instruction has been input control is terminated.

The beneficial effects of the second embodiment of the present invention are described below.

In general, when the vehicle is restarted from a free running condition, the phase is not known, so, in feed-forward control, the no-load induced voltage must be suppressed. The no-load induced voltage is therefore preferably suppressed by arranging for the current that is flowing to track the instruction current. The most effective method of doing this is to raise the current control response. In this way, the current can be prevented from becoming an over-current. As the method for achieving this, for example current tracking PWM on restart may be employed as in the embodiment.

Also, when voltage modulation type PWM is employed on restart from a free-running condition, since the phase is not known, the voltage instruction cannot be provided by feed-forward control, so there is no alternative to suppressing the voltage induced by the rotor flux by feedback control of the current control. In contrast, in the case of current tracking PWM, there is the characteristic feature of high current responsiveness, so, in particular if the current instruction ($i_{dref}$, $i_{qref}$ in Fig. 5) is zero, control can be achieved without using the phase information. Consequently by employing current tracking PWM on restarting, the torque shock on restarting (one-shot oscillation with large amplitude) and/or over-current can be suppressed. On the other hand, while, as a method of performing sensor-less control with current tracking PWM, a method as shown in Embodiment 1 is available, with regard to stability over the entire speed region, voltage modulation PWM is superior to current tracking PWM. Given the above, a method wherein, as in this second embodiment, torque shock is suppressed by employing current tracking PWM exclusively on restarting, but changing over to voltage modulation PWM, whereby stable sensor-based control can be implemented, after startup, is ideal as a method of restarting from a free-running condition under sensor-based control, and makes it possible to achieve restart in a stable manner.

Alternatively, if for example only voltage modulation PWM as shown in Fig. 6 is employed as a means of raising current control response, current control responsiveness can be improved by increasing the current control gain only on restarting, or by achieving earlier updating of the voltage vector by raising the switching frequency. In an embodiment in which the switching frequency on restarting is increased compared with normally, either voltage modulation PWM or current tracking PWM may be employed. For example, by combining an embodiment employing current tracking PWM only on restarting with an embodiment in which the switching frequency is raised on startup, or combining an embodiment in which the switching frequency is raised on restarting with an embodiment in which the current control gain is raised on restarting, current control response can be improved and torque shock on restarting can be suppressed.

Although, in this embodiment, a PMSM (Permanent Magnet Synchronous Motor) was disclosed, the same beneficial effect could be obtained with a synchronous machine using an electromagnet for the rotor. However, in the case of a permanent magnet synchronous motor as in the present embodiment, the magnetic flux cannot be adjusted, so in particular the problem of the magnetic flux generated on restarting from free-running is severe, so the beneficial effect of application of the present invention is considerable.

[Embodiment 3]

Next, a third embodiment of a motor control device according to the present invention will be described. This embodiment is an embodiment relating to a NS identification method of the rotor of a permanent magnet synchronous motor.

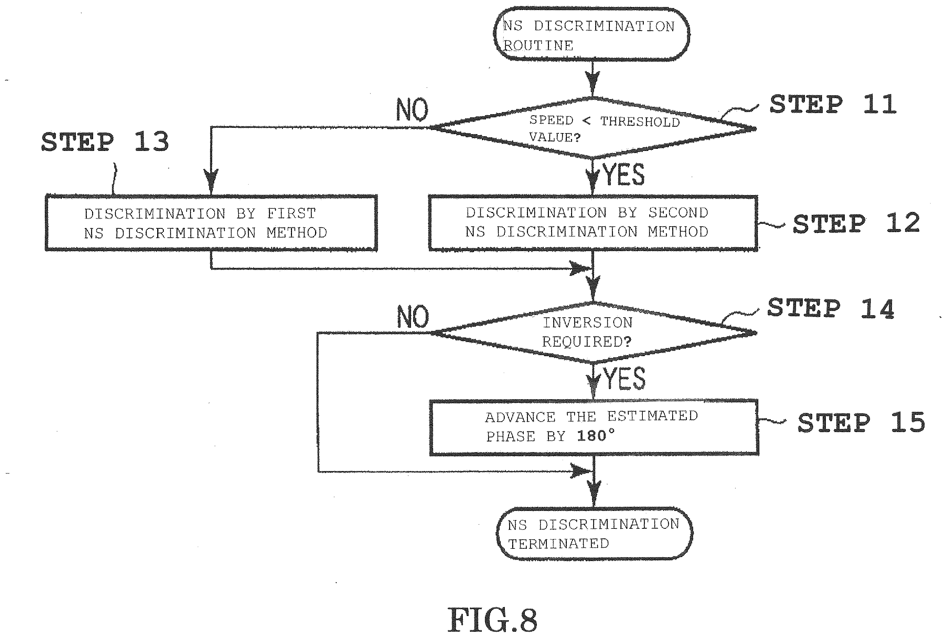

Fig. 8 is a flow chart showing the operation of the third embodiment.

In step 11, a single NS identification method is selected from a plurality of NS identification methods, in accordance with the angular velocity. In Fig. 8, two such identification methods are shown, but it would also be possible to select a single NS identification method from three or more NS identification methods in accordance with the angular velocity. In step 12, NS identification is implemented by the first NS identification method. The first NS identification method will be described later. In step 13, NS identification is implemented by the second NS identification method. The second NS identification method will be also described later.

In step 14, a decision is made as to whether or not phase inversion is necessary, depending on the result of the identification performed in steps 12 and 13. If, in step 15, it is decided that conversion is necessary in step 14, the inferred phase is advanced by 180°, to invert the phase (of course, it could also be delayed by 180°). The NS identification routine then terminates.

First of all, the first NS identification method will be described. The first NS identification method is typically a method making use of magnetic saturation. NS identification is performed by applying positive and negative voltages in the d axis direction of the inference coordinate system and utilizing the fact that a difference is produced at the N pole and the S pole in the amplitude of the current flowing, by magnetic saturation.

Next, the second NS identification method is a method utilizing induced voltage, according to this embodiment. A detailed description, including the benefits thereof is given below.

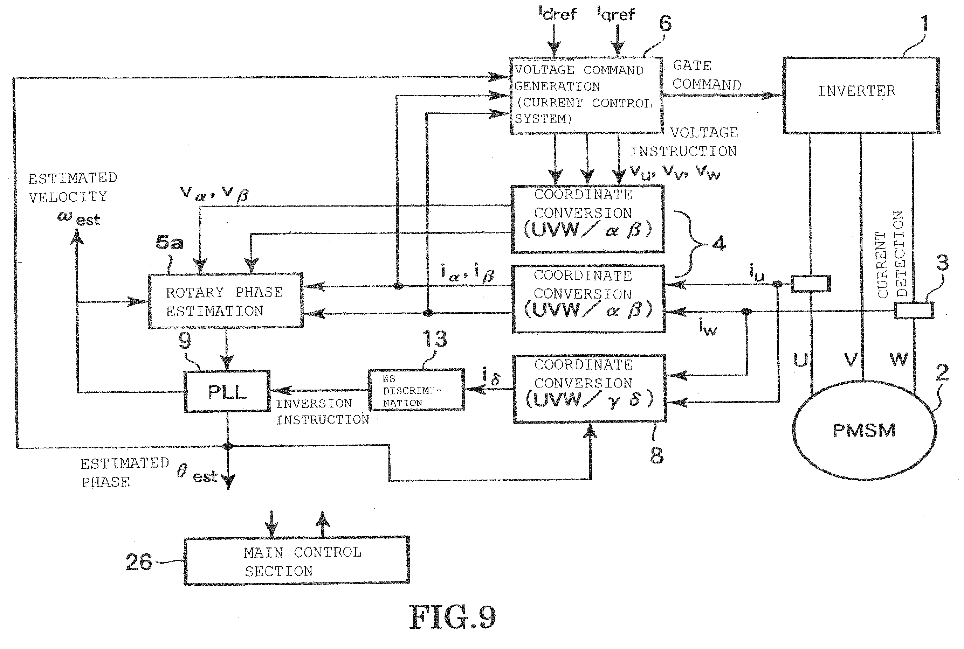

Fig. 9 shows the layout of a system in which the second NS identification method is adopted. The basic layout is the same as in the case of Embodiment 1, with the addition of a coordinate conversion section 8, an NS identification section 13 and a PLL 9.

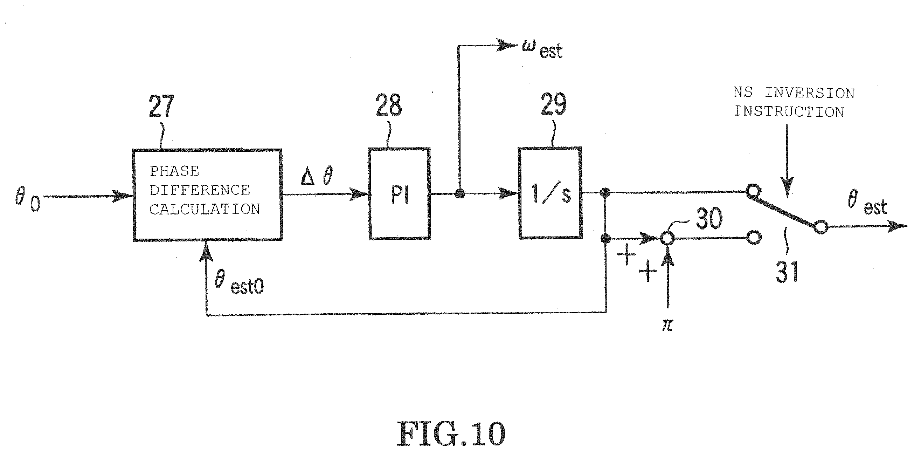

Fig. 10 is a block diagram showing the layout of the PLL 9. A phase difference calculation section 27 calculates the phase difference $\Delta\theta$ of the estimated phase $\theta_{e0}$ that is input from the rotational phase estimating section 5a and the estimated phase $\theta_{est0}$, which is the output signal of this circuit itself. The PI control section 28 performs PI control based on the phase difference $\Delta\theta$, and supplies an estimated angular velocity $\omega_{est}$. The estimated angular velocity $\omega_{est}$ is integrated by an integration section 29, to output an estimated phase $\theta_{est0}$. An adder 30 adds $\pi$ to the estimated phase $\theta_{est0}$. The switch 31 selects one of the estimated phase $\theta_{est0}$ and the estimated phase $\theta_{est0}$ to which $\pi$ has been added, in accordance with the NS inversion instruction, and outputs the estimated phase $\theta_{est}$. The main control section 26 is connected with each of these blocks, and performs overall control of this motor control device.

Next, NS identification according to this embodiment will be described. In this NS identification, NS identification is effected based on the $\delta$ axis current of the estimated coordinate system corresponding to the q axis current of the dq coordinate system.

First of all, equations (4) and (5) of the first embodiment will be reproduced.

[Math 6]

$$E_{0x} = \left(L_d - L_q\right)\left(\omega i_d - p i_q\right) + \omega\Phi_f$$
$$= \left(L_d - L_q\right)\left(\omega\left(i_\alpha\cos\theta + i_\beta\sin\theta\right) - p\left(-i_\alpha\sin\theta + i_\beta\cos\theta\right)\right) + \omega\Phi_f \quad \cdots \; (4)$$

[Math 7]

$$\begin{cases} e_\alpha = -E_{0x}\sin\theta = v_\alpha - (R_m + pL_d)i_\alpha - \omega(L_d - L_q)i_\beta \\ e_\beta = E_{0x}\cos\theta = v_\beta + \omega(L_d - L_q)i_\alpha - (R_m + pL_d)i_\beta \\ \theta = -\tan^{-1}(e_\alpha / e_\beta) \end{cases} \qquad \cdots (5)$$

When the phase is estimated using equation (5), there is a possibility that the sign of $E_{0x}$ may be changed by the sign of the current differential term, as in equation (4), and the estimated phase θ may thus sometimes be calculated with a 180°-inverted value. Consequently, as shown in Fig. 10, with the PLL, there is a possibility that the phase that is held by the PLL may be a 180°-inverted value, so NS identification is necessary irrespective of angular velocity.

Usually, NS identification is confined to the low speed range, so the induced voltage is small and consequently systems using magnetic saturation are widely employed; however, in the case of a method using magnetic saturation, time is required for magnetic saturation enabling NS identification to be achieved. In the high-voltage region described above (region in which the no-load induced voltage is at least the voltage on the DC side of the inverter), it is necessary to apply a negative current on the d axis, in order that the magnetic flux may be weakened and the voltage lowered; however, if the phase is estimated with a 180°-inverted value, a positive current would be applied to the d axis, having the contrary effect of raising the voltage, which is undesirable. In other words, unless NS identification is performed at an early stage, there is a possibility that over-voltage may be produced.

Thus, in a region in which the voltage is large (the angular velocity is large), such as the high-voltage region referred to above, the induced voltage can be utilised, so, by utilising this, NS identification can be effected in a short time. However, the induced voltage is extremely small at low speeds and sufficient accuracy cannot therefore be expected. Consequently, preferably two methods are provided, namely, a NS identification method adapted to the low speed region and a NS identification method adapted to the high-speed region, so that NS identification can be achieved in a short time at high speed. This is the chief content of the third embodiment.

A NS identification method according to a third embodiment is described below.

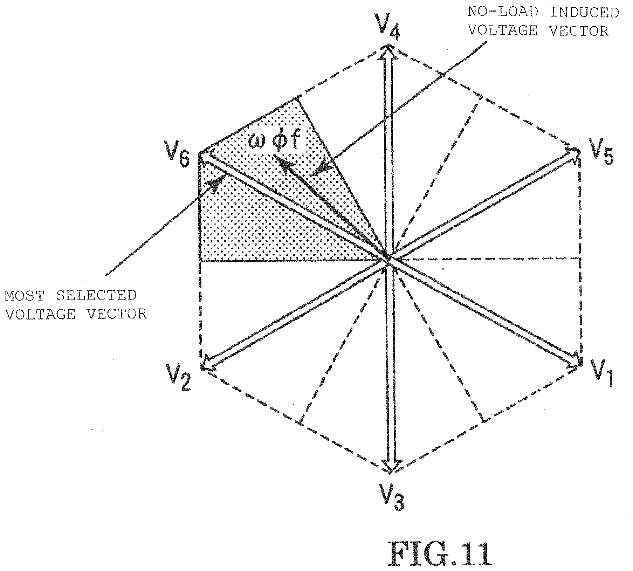

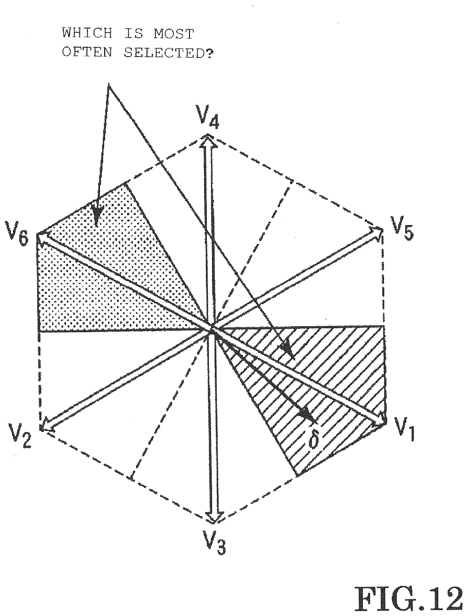

When current tracking PWM is employed in a region of large induced voltage, the voltage is selected in a direction such as to cancel the no-load induced voltage. Consequently, since the selected direction in which for example the most voltage vectors are selected is a direction such as to cancel the no-load induced voltage, the direction of the no-load induced voltage can be estimated from this (see Fig. 11). Although the direction in this case cannot be estimated accurately, sufficient precision is obtained for NS identification. Alternatively, NS identification can be effected (see Fig. 12) by determining which, of the voltage vector that is closest to the δ axis corresponding to the q axis in control and the voltage vector inverted by 180°, is mostly selected.

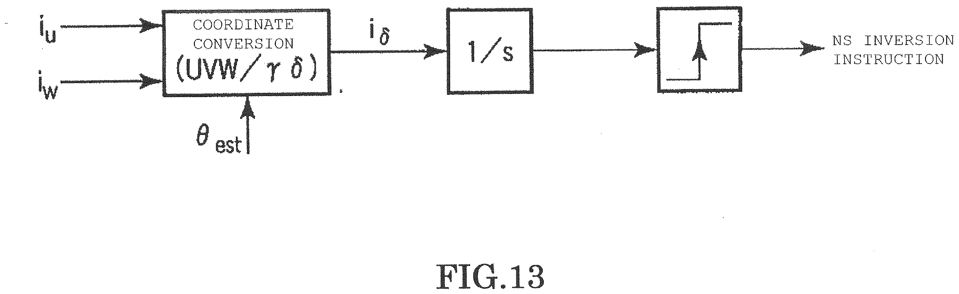

Next, another method of NS identification will be described. In a current tracking PWM, if current flows due to a no-load induced voltage above a certain level of angular velocity, this will be suppressed by the voltage vector. The average vector of the current is therefore in the -q axis direction, which is the direction of the current that is made to flow by the no-load induced voltage. Consequently, the integral of the δ axis current corresponding to the q axis during control is taken for example as in Fig. 13 and, if this is above a certain threshold value, a decision can be made that NS identification is necessary. Alternatively, identification can be performed using the average value of the δ axis current.

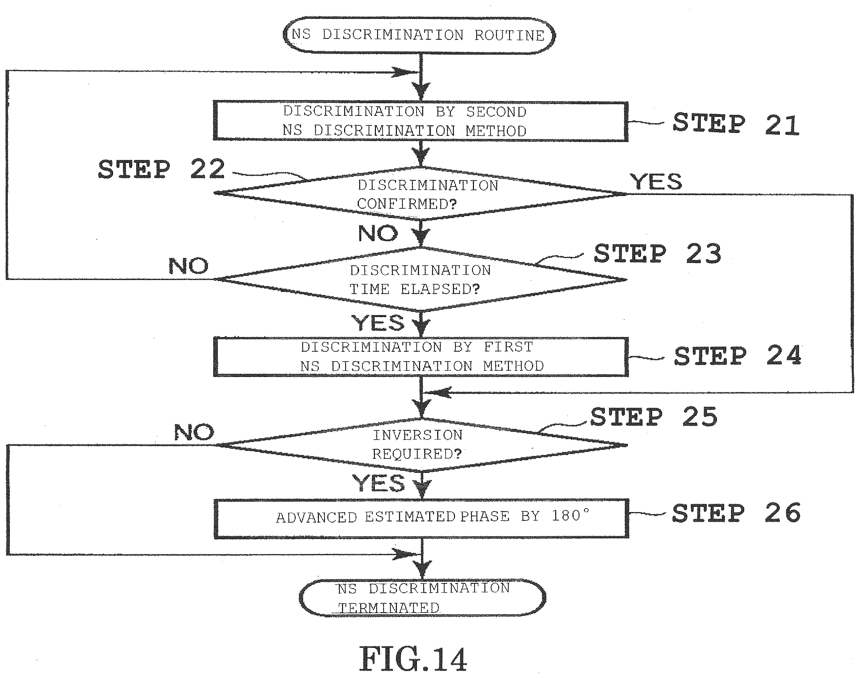

It should be noted that the processing of NS identification is not restricted to that shown in Fig. 8 and could be for example as in Fig. 14.

Next, in Fig. 14, NS identification is implemented by the second NS identification method in step 21. This is the same as step 13. In step 22, a determination is made as to whether or not it was possible to confirm NS identification in step 21. In the case of either "confirmed that inversion is necessary" or "confirmed that, since the position is correct, inversion will not be performed", it is concluded that NS identification was successfully confirmed.

In step 23, a determination is made as to whether or not a fixed time has elapsed. If, even though a fixed time has elapsed, identification is not successfully achieved by the second NS identification method, processing advances to step 24. In step 24, NS identification is performed by the first NS identification method. This is the same as step 12.

In step 25, a determination is made as to whether or not, in view of the results of the identification performed in steps 21 and 24, phase inversion is required. This is the same as step 14. If, in step 26, it is found that inversion was required in step 25, the estimated phase is advanced by 180°, thereby inverting the phase. (Of course, it would also be possible to delay the phase by 180°). This is the same as step 15. The NS identification routine is then terminated.

Although, in this embodiment, PMSM was described, the same benefits could also be obtained with a synchronous machine using an electromagnet for the rotor. However, when a permanent magnet synchronous motor is employed, as in the present embodiment, the magnetic flux cannot be adjusted, so in particular the problem of the magnetic flux generated on restarting from free-running is severe, so the beneficial effect of application of the present invention is considerable.

[Embodiment 4]

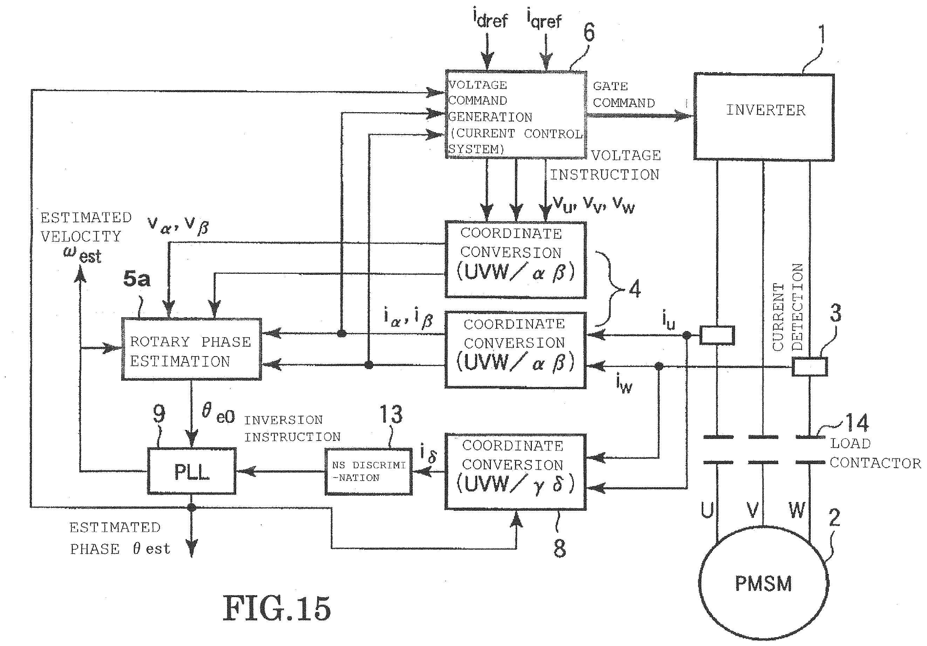

Next, a fourth embodiment of a motor control device according to the present invention will be described. Fig. 15 is a block diagram showing the layout of the fourth embodiment.

Basically, the layout of the system is the same as in the case of the third embodiment of Fig. 9, but the construction is one in which a load contactor is provided between the motor 2 and the inverter 1; by means of the load contactor, the motor 2 and the inverter 1 can be isolated. Although, in Fig. 15, the load contactor was provided between the current detector and the PMSM, it would also be possible to provide the load contactor between the current detector and the inverter 1.

In the case of restarting in the high-voltage region referred to above, the no-load induced voltage is larger than the voltage on the DC side of the inverter 1. In the high-voltage region, even if the inverter 1 is in the OFF condition, winding current therefore starts to flow at the instant that the load contactor is closed. Or DC current flows through the inverter 1. Or the voltage on the DC side of the inverter 1 fluctuates. Consequently, the high-voltage region can be identified by detecting any of these.

Now in the case where the high-voltage region has been identified, it is necessary for negative current to flow in the magnetic flux direction so as to suppress the no-load induced voltage; however, in particular on restart by closing the load contactor, the possibility may be imagined of the no-load induced voltage being much larger than the voltage on the DC side of the inverter 1. It is therefore necessary to make the "low current (weakened current)" large, so that this no-load induced voltage can be suppressed even in the case of the no-load induced voltage obtained at the maximum speed. In particular, voltage rise can be suppressed even at the maximum speed, by setting in accordance with the following expression.

[Math 8]

$$i_{dref} \leq \frac{1}{L_d}\left(\frac{V_{dc}}{\sqrt{2}\omega_{max}} - \Phi_f\right) \qquad \cdots (6)$$

Where $L_d$ denotes the inductance in the magnetic flux direction, $\omega_{max}$ denotes the maximum angular velocity, $V_{dc}$ denotes the voltage on the DC side of the inverter 1 obtained by the DC voltage detection means described above, and $\Phi_f$ denotes the permanent magnet, respectively.

**[Possibilities of industrial application]**

The present invention may be applied to for example a synchronous motor mounted in an electric train vehicle or the like and used to drive this vehicle or the like.

**[Explanation of the reference symbols]**

1 ... inverter, 2 ... PMSM, 3 ... current detection section, 4 ... coordinate conversion section (UVW → αβ), 5a ... rotational phase estimating section, 5b ... rotational phase difference estimating section, 6 ... angular velocity estimating section, 7 ... voltage instruction generating section, 8 ... coordinate conversion section (UVW → αβ), 9 ... PLL (phase locked loop), 10 ... current control section, 11 ... coordinate conversion section (αβ → UVW), 12 ... triangular wave PWM modulation section, 13 ...NS identification section, 14 ... load contactor.

**Claims**

**1.** A control device for a synchronous motor, comprising:

an inverter (1) which generates a three phase AC current to drive the synchronous motor (2);
a current detector (3) which detects a current of at least two phases of said three phase AC current between the inverter (1) and the motor (2);
a phase estimation section (5) which estimates a rotation phase based on a detected current by the current detector (3); and
a command generator (7) which generates, based on the detected current and an estimated rotation phase, a gate command to the inverter (1) so as to drive the synchronous motor (2),
**characterized in that** the command generator (7) configured to select only a non-zero voltage vector in each control cycle, each composed of a u-phase voltage element, a v-phase voltage element, and a w-phase voltage element, to generate the gate command for starting the inverter (1) during a free-run state.

2. The control device according to claim 1, wherein
the command generator (7) performs a current-tracking-type PWM when starting the inverter (1).

3. The control device according to claim 1, further comprising:

   a transforming section (4) which transforms the at least two currents on a three-phase fixed coordinate into second current values on a α-β fixed coordinate,
   wherein the phase estimation section (5) estimates a rotation phase based on the second current values.

4. The control device according to claim 1, wherein the non-zero voltage vector is composed of six types of vectors in accordance with combination of the u-phase voltage element, the v-phase voltage element, and the w-phase voltage element.

5. The control device according to claim 4, wherein the command generator (7) selects one of the six types of vectors so as to decrease a difference between a current vector obtained by the current detector (3) and an input current instruction vector.

6. The control device according to claim 2, wherein the command generator (7) further performs a voltage-modulating-type PWM when the starting of the inverter (1) is completed.

7. A method of controlling a synchronous motor, said method comprising the steps of:

   generating, using an inverter (1), a three phase AC current to drive the synchronous motor (2);
   detecting a current of at least two phases of said three phase AC current;
   estimating a rotation phase based on said detected current; and
   generating, based on the detected current and said estimated rotation phase, a gate command to the inverter (1) so as to drive the synchronous motor (2); **characterized by**
   selecting only a non-zero voltage vector in each control cycle, each composed of a u-phase voltage element, a v-phase voltage element, and a w-phase voltage element, to generate the gate command for starting the inverter (1) during a free run.

8. The method according to claim 7, wherein said step of generating comprises performing a current-tracking-type PWM when starting the inverter (1).

9. The method according to claim 8, wherein said step of generating further comprises the steps of:

   transforming the at least two currents on a three-phase fixed coordinate into second current values on a α-β fixed coordinate; and
   estimating a rotation phase based on the second current values.

10. The method according to claim 7, wherein
the non-zero voltage vector is composed of six types of vectors in accordance with combination of the u-phase voltage element, the v-phase voltage element, and the w-phase voltage element.

11. The method according to claim 10, wherein said step of generating further comprises the step of:
selecting one of the six types of vectors so as to decrease a difference between a current vector obtained by the current detector (3) and an input current instruction vector.

12. The method according to claim 8, wherein said step of generating further comprises performing a voltage-modulating-type PWM when the starting of the inverter (1) is completed.

**Patentansprüche**

1. Steuervorrichtung für einen Synchronmotor, die umfasst:

einen Wechselrichter (1), der einen Dreiphasenwechselstrom zum Antreiben des Synchronmotors (2) erzeugt;

einen Stromdetektor (3), der einen Strom von mindestens zwei Phasen des Dreiphasenwechselstroms zwischen dem Wechselrichter (1) und dem Motor (2) detektiert;

einen Phasenschätzungsabschnitt (5), der eine Rotationsphase basierend auf einem durch den Stromdetektor (3) detektierten Strom schätzt; und

einen Befehlsgenerator (7), der basierend auf dem detektierten Strom und einer geschätzten Rotationsphase einen Gate-Befehl an den Wechselrichter (1) erzeugt, um den Synchronmotor (2) anzutreiben,

**dadurch gekennzeichnet, dass** der Befehlsgenerator (7) ausgestaltet ist, um nur einen Nicht-Null-Spannungsvektor in jedem Steuerzyklus auszuwählen, der jeweils aus einem U-Phasen-Spannungselement, einem V-Phasen-Spannungselement und einem W-Phasen-Spannungselement besteht, um den Gate-Befehl zum Starten des Wechselrichters (1) während eines Freilaufzustands zu erzeugen.

2. Steuervorrichtung nach Anspruch 1, wobei
der Befehlsgenerator (7) beim Starten des Wechselrichters (1) eine Pulsbreitenmodulation vom Strom-Tracking-Typ durchführt.

3. Steuervorrichtung nach Anspruch 1, die ferner umfasst:

einen Transformationsabschnitt (4), der die mindestens zwei Ströme auf einer festen Dreiphasen-Koordinate in zweite Stromwerte auf einer festen $\alpha$-$\beta$-Koordinate umwandelt,
wobei der Phasenschätzungsabschnitt (5) eine Rotationsphase basierend auf den zweiten Stromwerten schätzt.

4. Steuervorrichtung nach Anspruch 1, wobei der Nicht-Null-Spannungsvektor aus sechs Typen von Vektoren in Übereinstimmung mit der Kombination des U-Phasen-Spannungselements, des V-Phasen-Spannungselements und des W-Phasen-Spannungselements besteht.

5. Steuervorrichtung nach Anspruch 4, wobei der Befehlsgenerator (7) einen von den sechs Typen von Vektoren auswählt, um eine Differenz zwischen einem durch den Stromdetektor (3) erhaltenen Stromvektor und einem Eingangsstrom-Anweisungsvektor zu verringern.

6. Steuervorrichtung nach Anspruch 2, wobei der Befehlsgenerator (7) ferner eine Pulsbreitenmodulation vom Spannungsmodulationstyp durchführt, wenn der Start des Wechselrichters (1) abgeschlossen ist.

7. Verfahren zum Steuern eines Synchronmotors, wobei das Verfahren die folgenden Schritte umfasst:

Erzeugen eines Dreiphasen-Wechselstroms zum Antreiben des Synchronmotors (2) unter Verwendung eines Wechselrichters (1);
Detektieren eines Stroms von mindestens zwei Phasen des Dreiphasenwechselstroms ;
basierend auf dem detektierten Strom, Schätzen einer Rotationsphase; und
basierend auf dem detektierten Strom und der geschätzten Rotationsphase, Erzeugen eines Gate-Befehls an den Wechselrichter (1) zum Antreiben des Synchronmotors (2);
**gekennzeichnet durch**:
Auswählen von lediglich einem Nicht-Null-Spannungsvektor in jedem Steuerzyklus, der jeweils aus einem U-Phasen-Spannungselement, einem V-Phasen-Spannungselement und einem W-Phasen-Spannungselement besteht, um den Gate-Befehl zum Starten des Wechselrichters (1) während eines Freilaufs zu erzeugen.

8. Verfahren nach Anspruch 7, wobei der Erzeugungsschritt das Durchführen einer Pulsbreitenmodulation vom Strom-Tracking-Typ beim Starten des Wechselrichters (1) umfasst.

9. Verfahren nach Anspruch 8, wobei der Erzeugungsschritt ferner die folgenden Schritte umfasst:

Umwandeln der mindestens zwei Ströme auf einer festen Dreiphasenkoordinate in zweite Stromwerte auf einer festen $\alpha$-$\beta$-Koordinate; und
Schätzen einer Rotationsphase basierend auf den zweiten Stromwerten.

10. Verfahren nach Anspruch 7, wobei:
der Nicht-Null-Spannungsvektor aus sechs Typen von Vektoren in Übereinstimmung mit der Kombination des U-Phasen-Spannungselements, des V-Phasen-Spannungselements und des W-Phasen-Spannungselements besteht.

**11.** Verfahren nach Anspruch 10, wobei der Erzeugungsschritt ferner den folgenden Schritt umfasst:
Auswählen von einem von den sechs Typen von Vektoren, um eine Differenz zwischen einem durch den Stromdetektor (3) erhaltenen Stromvektor und einem Eingangsstrom-Anweisungsvektor zu verringern.

**12.** Verfahren nach Anspruch 8, wobei der Erzeugungsschritt ferner das Durchführen einer Pulsbreitenmodulation vom Spannungsmodulationstyp umfasst, wenn der Start des Wechselrichters (1) abgeschlossen ist.

**Revendications**

**1.** Dispositif de régulation pour un moteur synchrone, comprenant :

un onduleur (1) qui génère un courant alternatif, CA, triphasé pour entraîner le moteur synchrone (2) ;
un détecteur de courant (3) qui détecte un courant d'au moins deux phases dudit courant CA triphasé entre l'onduleur (1) et le moteur (2) ;
une section d'estimation de phase (5) qui estime une phase de rotation sur la base d'un courant détecté par le détecteur de courant (3) ; et
un générateur de commande (7) qui génère, sur la base du courant détecté et d'une phase de rotation estimée, une commande de grille à l'onduleur (1) de manière à entraîner le moteur synchrone (2),
**caractérisé en ce que** le générateur de commande (7) est configuré pour sélectionner uniquement un vecteur de tension différente zéro dans chaque cycle de régulation, chacun étant composé d'un élément de tension de phase u, d'un élément de tension de phase v et d'un élément de tension de phase w, pour générer la commande de grille pour le démarrage de l'onduleur (1) dans un état de fonctionnement libre.

**2.** Dispositif de régulation selon la revendication 1, dans lequel
le générateur de commande (7) effectue une modulation de largeur d'impulsion, PWM, de type à suivi de courant lors du démarrage de l'onduleur (1).

**3.** Dispositif de régulation selon la revendication 1, comprenant en outre :

une section de transformation (4) qui transforme les au moins deux courants sur une coordonnée fixe triphasée en deuxièmes valeurs de courant sur une coordonnée fixe α-β,
dans lequel la section d'estimation de phase (5) estime une phase de rotation sur la base des deuxièmes valeurs de courant.

**4.** Dispositif de régulation selon la revendication 1, dans lequel le vecteur de tension non nulle se compose de six types de vecteurs en fonction d'une combinaison de l'élément de tension de phase u, de l'élément de tension de phase v et de l'élément de tension de phase w.

**5.** Dispositif de régulation selon la revendication 4, dans lequel le générateur de commande (7) sélectionne l'un des six types de vecteurs de manière à réduire une différence entre un vecteur de courant obtenu par le détecteur de courant (3) et un vecteur d'instruction de courant d'entrée.

**6.** Dispositif de régulation selon la revendication 2, dans lequel le générateur de commande (7) effectue en outre une PWM de type à modulation de tension lorsque le démarrage de l'onduleur (1) est terminé.

**7.** Procédé de régulation d'un moteur synchrone, ledit procédé comprenant les étapes de :

la génération, en utilisant un onduleur (1), d'un courant alternatif, CA, triphasé pour entraîner le moteur synchrone (2) ;
la détection d'un courant d'au moins deux phases dudit courant CA triphasé ;
l'estimation d'une phase de rotation sur la base dudit courant détecté ; et
la génération, sur la base du courant détecté et de ladite phase de rotation estimée, d'une commande de grille à l'onduleur (1) de manière à entraîner le moteur synchrone (2),
**caractérisé par**
la sélection uniquement d'un vecteur de tension différente zéro dans chaque cycle de régulation, chacun étant composé d'un élément de tension de phase u, d'un élément de tension de phase v et d'un élément de tension de phase w, pour générer la commande de grille pour le démarrage de l'onduleur (1) au cours d'un fonctionnement libre.

8. Procédé selon la revendication 7, dans lequel ladite étape de la génération comprend l'exécution d'une modulation de largeur d'impulsion, PWM, de type à suivi de courant lors du démarrage de l'onduleur (1).

9. Procédé selon la revendication 8, dans lequel ladite étape de la génération comprend en outre les étapes de :

la transformation des au moins deux courants sur une coordonnée fixe triphasée en deuxièmes valeurs de courant sur une coordonnée fixe $\alpha$-$\beta$ ; et
l'estimation d'une phase de rotation sur la base des deuxièmes valeurs de courant.

10. Procédé selon la revendication 7, dans lequel le vecteur de tension non nulle se compose de six types de vecteurs en fonction d'une combinaison de l'élément de tension de phase u, de l'élément de tension de phase v et de l'élément de tension de phase w.

11. Procédé selon la revendication 10, dans lequel ladite étape de la génération comprend en outre l'étape de :
la sélection de l'un des six types de vecteurs de manière à réduire une différence entre un vecteur de courant obtenu par le détecteur de courant (3) et un vecteur d'instruction de courant d'entrée.

12. Procédé selon la revendication 8, dans lequel ladite étape de la génération comprend en outre l'exécution d'une PWM de type à modulation de tension lorsque le démarrage de l'onduleur (1) est terminé.

FIG.1

FIG.2

FIG.3

| | | V | U | V | W |
|---|---|---|---|---|---|
| $-\pi/6 < \theta_i \leqq \pi/6$ | $V_4$ | 1 | 0 | 0 |
| $\pi/6 < \theta_i \leqq \pi/2$ | $V_6$ | 1 | 1 | 0 |
| $\pi/2 < \theta_i \leqq 5\pi/6$ | $V_2$ | 0 | 1 | 0 |
| $5\pi/6 < \theta_i \leqq 7\pi/6$ | $V_3$ | 0 | 1 | 1 |
| $7\pi/6 < \theta_i \leqq 3\pi/2$ | $V_1$ | 0 | 0 | 1 |
| $3\pi/2 < \theta_i \leqq 11\pi/6$ | $V_5$ | 1 | 0 | 1 |

EP 2 573 934 B1

FIG.4

EP 2 573 934 B1

FIG.5

FIG.6

SYNCHRONOUS MACHINE CONTROL PROCESS ROUTINE

STEP 01 — MOTOR START-UP? — NO / YES

STEP 02 — CURRENT CONTROL IN CURRENT TRACKING PWM

STEP 03 — ESTIMATE ROTARY PHASE ANGLE/VELOCITY

STEP 04 — SWITCH TO VOLTAGE MODULATION PWM? — NO / YES

STEP 05 — CURRENT CONTROL BY VOLTAGE MODULATION PWM

STEP 06 — ESTIMATE ROTARY PHASE ANGLE/VELOCITY

STEP 07 — STOP MOTOR? — NO / YES

TERMINATE CONTROL

FIG.7

FIG.8

EP 2 573 934 B1

FIG.9

FIG.10

FIG.11

EP 2 573 934 B1

FIG.12

**FIG.13**

EP 2 573 934 B1

FIG.14

EP 2 573 934 B1

**FIG.15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008001690 A
- JP 3636340 B
- JP H7177788 B

- JP 3486326 B
- JP 2009201284 B
- JP 3267528 B